# EUROPEAN PATENT SPECIFICATION

(11) **EP 4 063 211 B1**
(45) Date of publication and mention of the grant of the patent: **19.06.2024**
(21) Application number: 21854734.7
(22) Date of filing: 02.02.2021
(51) Int. Cl.: B60W 20/12, B60W 20/16, B60W 10/06, B60W 40/076

(54) **METHOD, APPARATUS, AND SYSTEM FOR CONTROLLING ENGINE, AND VEHICLE**
VERFAHREN, VORRICHTUNG, SYSTEM UND FAHRZEUG ZUR MOTORSTEUERUNG
PROCÉDÉ, APPAREIL ET SYSTÈME DE COMMANDE DE MOTEUR, ET VÉHICULE ASSOCIÉ

(43) Date of publication of application: 28.09.2022
(73) Proprietor: Zhejiang Geely Holding Group Co., Ltd., Hangzhou, Zhejiang 310051 (CN); Ningbo Geely Royal Engine Components Co., Ltd., Ningbo City, Zhejiang 315336 (CN); Aurobay Technology Co., Ltd, Ningbo, Zhejiang 315800 (CN)
(72) Inventor: JING, Junchao, Zhejiang Province 315336 (CN); LIU, Yiqiang, Zhejiang Province 315336 (CN); HUANG, Weishan, Zhejiang Province 315336 (CN); YANG, Jun, Zhejiang Province 315336 (CN); YU, Xuemei, Zhejiang Province 315336 (CN); WANG, Ruiping, Zhejiang Province 315336 (CN); SCHOLTEN, Ingo, Zhejiang Province 315336 (CN)
(74) Representative: Tansini, Elio Fabrizio
(86) International application number: PCT/CN2021/074891
(87) International publication number: WO 2022/165638

(56) References cited:
- EP-A1- 1 930 690
- EP-A1- 1 935 733
- CN-A- 101 010 528
- CN-A- 104 554 247
- CN-A- 106 476 793
- CN-A- 110 667 401
- CN-A- 111 348 048
- DE-A1-102017 209 747
- US-A1- 2015 314 775
- US-A1- 2016 280 213

## Description

### Technical Field

The present invention relates to the technical field of engine control, in particular to an engine control method, an engine control device, an engine control system, and a vehicle.

### Background

With increasingly strict requirements of national regulations on fuel consumption and emission, and development of electrification system, hybrid power technology is a key for achieving energy saving and emission reduction. In the prior art, during the start-stop of an engine, a judgment basis of the start-stop of the engine consists of working states of the engine, an electric motor, a battery and other relevant information of the vehicle. However, it is not considered that which conditions should be met for the start-stop of the engine when the vehicle is going uphill or downhill.

When the vehicle is running on a ramp, due to influence of factors such as braking force, steering force, skidding and the others in the running process, the acceleration fluctuates greatly, which has a great influence on the calculation of the slope. Moreover, considering which conditions for the start-stop of the engine when the slope is relatively large is beneficial to both of the fuel consumption and torque requested by a driver.

The document US 2016/0280213 A1 discloses a drive control method for determining conditions of start-stop of an engine of a hybrid electric vehicle.

The document EP1930690 A1 discloses a method and device for dynamically determining a slope of a road based on a collected value of the acceleration sensor and an instantaneous acceleration.

### Summary

The invention is set out in the appended set of claims. According to embodiments of the present invention, the execution information for controlling the start-stop of the engine is detected, the instantaneous acceleration is obtained according to the ratio of the real-time vector velocity to time, and the acceleration of the vehicle is calculated by the collected value of the acceleration sensor and the instantaneous acceleration. Then the calculated acceleration is filtered, the value of the slope is obtained by converting with a conversion relationship between the filtered value of the acceleration and the slope, and then the start-stop of the engine is controlled according to the value of the slope and the value of torque of the vehicle requested by the driver. According to the technical solutions of the present invention, it is optimized that both the slope and the torque force of the driver are considered simultaneously in the conditions to be satisfied of start-stop control of the engine, and the fuel consumption is effectively reduced.

### Brief Description of Drawings

In order to more clearly explain technical solutions in the embodiments of the present invention, accompanying drawings used in the description of the embodiments will be briefly introduced in the following description. It is apparent that the drawings in the following description are only some embodiments of the present invention, and for those skilled in the art, other drawings can be obtained according to these drawings without paying inventive efforts.
FIG. 1 is a schematic structural diagram of a dual-electric motor hybrid power control system according to an embodiment of the present invention.
FIG. 2 is a schematic flow diagram of an engine control method according to an embodiment of the present invention.
FIG. 3 is a schematic diagram of slope and force when a vehicle is going uphill according to an embodiment of the present invention.
FIG. 4 is a schematic flow diagram of acquiring a filtered value of acceleration in an engine control method according to an embodiment of the present invention.
FIG. 5 is a schematic flow diagram of an engine control device according to an embodiment of the present invention.

### Detailed Description

The technical solutions in the embodiments of the present invention will be clearly and completely described in the following with reference to the drawings in the embodiments of the present invention. It is apparent that the described embodiments are only part of the embodiments of the present invention rather than all of the embodiments. Based on the embodiments in the present invention, all other embodiments obtained by those skilled in the art without making inventive efforts are within the scope of the present invention, as defined in the appended claims.

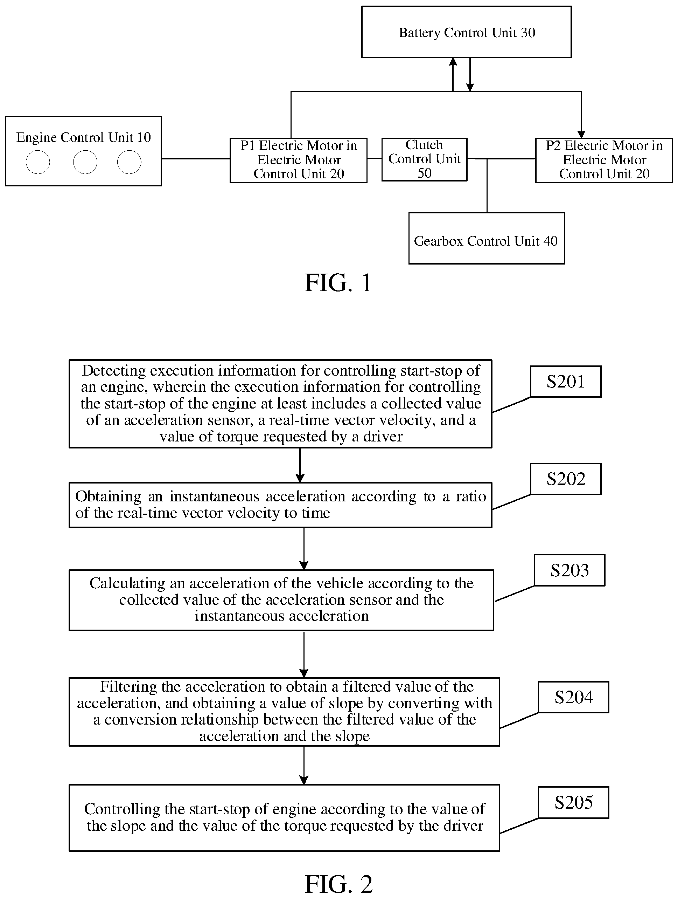

Referring to FIG. 1, which shows a schematic structural diagram of a dual-electric motor hybrid power control system according to an embodiment of the present invention, the whole control system includes an engine control unit 10, an electric motor control unit 20, a battery control unit 30, a gearbox control unit 40 and a clutch control unit 50. The dual-electric motor hybrid system has three modes for electric motors: electric-only mode, series mode and parallel mode. In the series mode, the P1 electric motor in the electric motor control unit 20 drives wheels, and at this time the engine control unit 10 charges the battery control unit 30 through the P1 electric motor in the electric motor control unit 20. In the parallel mode, the clutch control unit 50 is in a connected state, and the engine directly drives the wheels at this time.

Referring to FIG. 2, which shows a schematic flow diagram of an engine start-stop control method according to an embodiment of the present invention, the engine start-stop control method according to an embodiment of the present invention will be described in detail in the following with reference to the schematic diagram shown in FIG. 2. The method specifically includes the following steps.

S201: detecting execution information for controlling start-stop of an engine, wherein the execution information for controlling the start-stop of the engine at least includes a collected value of an acceleration sensor, a real-time vector velocity, and a value of torque requested by a driver.

S202: obtaining an instantaneous acceleration according to a ratio of the real-time vector velocity to time.

S203: calculating an acceleration of the vehicle according to the collected value of the acceleration sensor and the instantaneous acceleration.

Specifically, calculating the acceleration of the vehicle according to the collected value of the acceleration sensor and the instantaneous acceleration includes: subtracting the instantaneous acceleration from the collected value of the acceleration sensor to obtain the acceleration of the vehicle.

In the embodiment of the present invention, in order to reduce the influence of the real-time vector velocity as much as possible when the vehicle is going uphill and downhill, the instantaneous acceleration of the vehicle is firstly calculated by the ratio of the real-time vector velocity of the vehicle to time, and then the acceleration of the vehicle is calculated by subtracting the instantaneous acceleration of the vehicle from the collected value of the acceleration sensor, wherein the value of the real-time vector velocity may be either negative or positive, and the real-time vector velocity is positive when the vehicle is going forward relative to the ramp, and the real-time vector velocity is negative when the vehicle is going backward relative to the ramp.

It is necessary to filter the collected value of the acceleration sensor due to existence of fluctuation of the collected value of the acceleration sensor. When selecting a collected value of the acceleration sensor, it is necessary to ensure that a same filter constant must be used for the collected value of the acceleration of the acceleration sensor and the instantaneous acceleration, for example, the acceleration sensor with a filter constant of 0.5s is used at the same time. A reason for this is to avoid a situation that a difference value by subtracting the instantaneous acceleration of the vehicle from the collected value of the acceleration sensor will be over-compensated or under-compensated.

S204: filtering the acceleration to obtain a filtered value of the acceleration and obtaining a value of slope by converting with a conversion relationship between the filtered value of the acceleration and the slope.

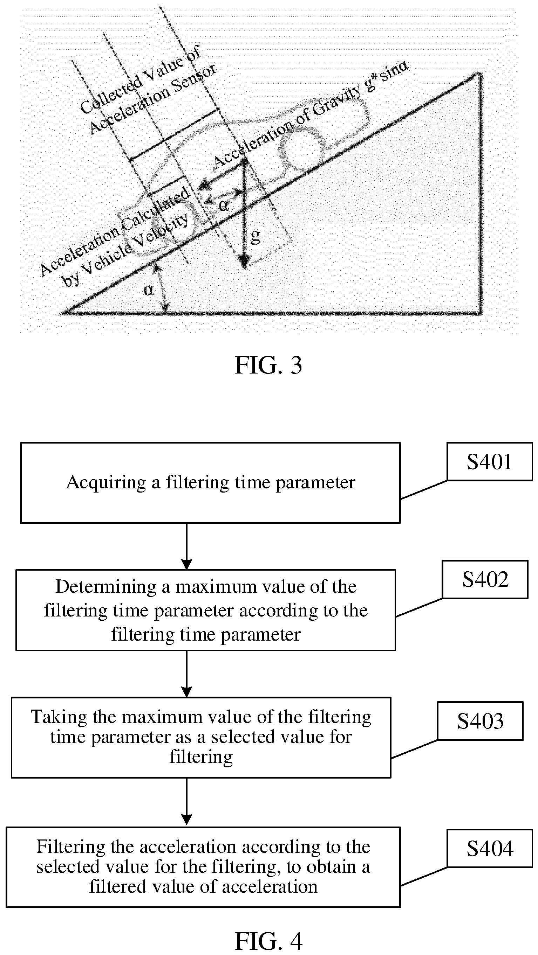

In an embodiment of the present invention, a road slope (uphill/downhill) is calculated according to the collected value of the acceleration sensor measured by the acceleration sensor, and the collected value of the acceleration sensor is zero when the vehicle is stationary on the horizontal plane. When the vehicle is on a ramp, as shown in FIG. 3, which shows a schematic diagram of slope and force when a vehicle is going uphill according to the embodiment of the present invention, when the vehicle is stationary on a ramp, g*sinα=Long Acc₁, where Long Acc₁ is the collected value of the acceleration sensor when the vehicle is stationary on the ramp, g is the acceleration of gravity and α is a radian value.

When the vehicle is running on the ramp, the collected value measured by the acceleration sensor contains the instantaneous acceleration of the real-time vector velocity. In order to reduce the influence of the instantaneous acceleration of the real-time vector velocity on the acceleration of the vehicle, the collected value measured by the acceleration sensor is represented by Long Acc here, and the instantaneous acceleration needs to be subtracted from the collected value of the acceleration measured by the acceleration sensor, that is g*sinα= Long Acc₂-dv/dt, where Long Acc₂ is the collected value of the acceleration sensor when the vehicle is moving on the ramp, g is the acceleration of gravity, α is the radian value, and dv/dt is a value of the instantaneous acceleration in an extremely short time.

Due to existence of fluctuation of collected value of the acceleration sensor, it needs to be filtered, and selected value for filtering will be introduced in detail below. Here, it is noted that the same filter constant must be used for the collected value measured by the acceleration sensor and the instantaneous acceleration, for example, an acceleration sensor with a filter constant of 0.5s should be used at the same time.

Based on the obtained radian value as an intermediate value, the conversion relationship between the filtered value of acceleration and the slope is indirectly obtained, wherein the conversion relationship is that the radian value is multiplied by (180/π) to obtain an angle value in degrees, and the specific conversion relationship is shown in Table 1.

**Table 1**

| Slope conversion relationship | unit |
|---|---|
| α | Radian (rad) |
| α * 180/π | Angle (degree) |
| sin(θ)*100, θ=α*180/π | Slope (%) |

Therefore, a preset table of a corresponding relationship between the filtered acceleration of the vehicle and the value of the slope can be obtained, as shown in Table 2, which is a partial example of the corresponding relationship between the filtered acceleration of the vehicle and the value of slope according to the embodiment of the present invention.

**Table 2**

| | | | | | |
|---|---|---|---|---|---|
| Filtered acceleration (LongAcc₂-dv/dt) (m/s²) | -9 | -4.9 | 0 | 4.9 | 9 |
| Slope (degree) | -90 | -49 | 0 | 49 | 90 |

Specifically, as shown in FIG. 4, it is a schematic flow diagram of acquiring a filtered value of acceleration in an engine control method according to an embodiment of the present invention. As shown in FIG. 4,
S401: acquiring filtering time parameter;
S402: determining a maximum value of the filtering time parameter according to the filtering time parameter;
S403: taking the maximum value of the filtering time parameter as a selected value for filtering; and
S404: filtering the acceleration according to the selected value for filtering, to obtain a filtered value of acceleration.

Specifically, prior to filtering the acceleration to obtain the filtered value of acceleration, the method further includes: judging whether an absolute value of the real-time vector velocity is greater than 0.1km/h, wherein if not, the value of the filtering time parameter ranges between 1s and 2s; if yes, the value of the filtering time parameter is determined according to filtering influencing factors.

Specifically, the filtering influencing factors include velocity, braking force, steering force, lateral acceleration, velocity difference between front wheels and rear wheels, and running direction of the vehicle; and determining the value of the filtering time parameter according to the filtering influencing factors includes:
judging whether the running direction in the filtering influencing factors is changed or not, wherein if yes, the value of the filtering time parameter ranges between 10s and 30s; if not, the maximum value of the filtering time parameter is selected as a selected value for the filtering of the acceleration according to the filtering time parameter corresponding to the filtering influencing factors.

In the embodiment of the present invention, the filtering time parameter should rapidly decrease and reach the current optimal selected value when the absolute value of the real-time vector velocity is less than 0.1 km/h, that is, the optimal selected value of the filtering time parameter is 1.5s. When the absolute value of the real-time vector velocity is greater than 0.1 km/h, in this case the filtering time parameter is determined by the filtering influencing factors. According to the filtering time parameter corresponding to the filtering influencing factors, the maximum value of the filtering time parameter is selected as the selected value for filtering of the acceleration. The detailed influence of the filtering time parameter is as follows.
1) When the filtering time parameter is influenced by the braking force, the corresponding filtering time parameter is determined according to a preset table of a filtering time parameter corresponding relationship between the absolute value of the real-time vector velocity and the braking force, as shown in Table 3, which shows a partial example of the filtering time parameter corresponding to the absolute value of the real-time vector velocity and the braking force according to the embodiment of the present invention.

**Table 3**

| Absolute value of real-time vector velocity (km/h) | 20 | 50 | 60 | 100 |
|---|---|---|---|---|
| Braking force (Nm) | | | | |
| 0 | 2 | 2 | 1 | 1 |
| 500 | 10 | 5 | 5 | 5 |
| 2000 | 20 | 20 | 5 | 5 |
| 5000 | 20 | 20 | 10 | 10 |

As shown in Table 3, the filtering time parameter is larger when the absolute value of real-time vector velocity is lower. In this case, the greater the braking force is, the smaller the slope changes and the larger the filtering time parameter is. When the absolute value of the real-time vector velocity is less than 0.1 for more than 1s, the filtering time parameter should be rapidly reduced to 1.5s in order to make the slope rapidly become the actual value.
2) When the filtering time parameter is influenced by lateral acceleration, a corresponding filtering time parameter is determined according to a preset table of a filtering time parameter corresponding relationship between the absolute value of the real-time vector velocity and the lateral acceleration, as shown in Table 4, which shows a partial example of the filtering time parameter corresponding to the absolute value of the real-time vector velocity and the lateral acceleration according to the embodiment of the present invention.

**Table 4**

| Absolute value of real-time vector velocity (km/h) | 20 | 50 | 60 | 100 |
|---|---|---|---|---|
| Lateral acceleration (m/s²) | | | | |
| 0 | 1 | 1 | 1 | 1 |
| 1 | 1 | 1 | 1 | 1 |
| 1.5 | 30 | 30 | 1 | 1 |
| 3 | 30 | 30 | 10 | 10 |

As shown in Table 4, the filtering time parameter is larger when the vehicle velocity is lower. In this case, the larger the lateral steering acceleration is, the smaller the slope changes and the larger the filtering time parameter is.
3) When the filtering time parameter is influenced by the velocity difference between front wheels and rear wheels, the corresponding filtering time parameter is determined according to a preset table of a corresponding relationship between the velocity difference between front wheels and rear wheels and the filtering time parameter, as shown in Table 5, which shows a partial example of the filtering time parameter corresponding to the velocity difference between front wheels and rear wheels according to the embodiment of the present invention.

**Table 5**

| | | | | |
|---|---|---|---|---|
| Velocity difference between front wheels and rear wheels (skidding wheels) (km/h) | 0 | 1 | 2 | 3 |
| Filtering time parameter (s) | 0 | 2 | 10 | 10 |

As shown in Table 5, the velocity difference between the front wheels and the rear wheels will be larger when the vehicle skids, and the filtering time parameter will be larger at this time, thus avoiding the fluctuation of vehicle acceleration and obtaining a stable value of vehicle acceleration.
4) When the running direction in the influencing factors of the filtering time parameter changes, the filtering time parameter ranges between 10s and 30s, wherein an optimal filtering time parameter is 20s according to experimental values.

S205: controlling the start-stop of engine according to the value of the slope and the value of the torque requested by the driver.

Specifically, it is judged whether the vehicle is in a state of going uphill, wherein when the vehicle is in the state of going uphill, the engine is started if the value of the slope is greater than 8 degrees and the value of the torque requested by the driver is greater than a limit value of torque corresponding to the absolute value of the real-time vector velocity; and
the engine is stopped after a delay of 1s to 3s if the value of the slope is less than 3 degrees.

Specifically, when the vehicle is in a state of going downhill, the engine is started if the value of the slope is less than -10 degrees and the value of the torque requested by the driver is greater than the limit value of the torque corresponding to the absolute value of the real-time vector velocity; and
the engine is stopped if the value of the slope is greater than -5 degrees or the value of the torque requested by the driver is less than the limit value of the torque corresponding to the absolute value of the real-time vector velocity.

In the embodiment of the present invention, the start-stop of the engine is controlled according to the value of the slope and the value of the vehicle's torque requested by the driver. When the vehicle is in the state of going uphill, according to the preset list of a corresponding relationship between the absolute value of the real-time vector velocity and the limit value of the torque for the vehicle to start the engine when the vehicle is going uphill, as shown in Table 6, which shows a partial example of the list of corresponding relationship between the absolute value of real-time vector velocity and the limit value of the torque of the vehicle when the vehicle is starting the engine and going uphill according to the embodiment of the present invention. When the value of the slope is greater than 8 degrees and at the same time the value of torque requested by the driver is greater than the limit value of the torque corresponding to the absolute value of the real-time vector velocity, the engine is started. If the value of the slope is less than 3 degrees, regardless of whether the value of the torque of the vehicle requested by the driver is greater than the limit value of the torque corresponding to the absolute value of the real-time vector velocity, the engine is stopped after a delay of 1s to 3s, wherein the optimal delay time is 2s and the engine is stopped after a delay of 2s.

**Table 6**

| | | | | |
|---|---|---|---|---|
| Absolute value of real-time vector velocity (km/h) | 0 | 8 | 15 | 20 |
| Limit value of torque (Nm) | 2000 | 1600 | 1200 | 1200 |

When the vehicle is in a state of going downhill, according to the preset list of the corresponding relationship between the absolute value of the real-time vector velocity and the limit value of the torque for the vehicle to start the engine when going downhill, as shown in Table 7, which shows a partial example of the corresponding relationship between the absolute value of the real-time vector velocity and the limit value of the torque of the vehicle when the vehicle is starting the engine and going downhill according to the embodiment of the present invention. When the value of the slope is less than -10 degrees and at the same time the value of the torque requested by the driver is greater than the limit value of the torque corresponding to the absolute value of the real-time vector velocity, the engine is started. If the value of the slope is greater than -5 degrees or the value of the torque requested by the driver is less than the limit value of the torque corresponding to the absolute value of the real-time vector velocity, the engine is stopped. When the vehicle is going downhill, according to the preset list of the corresponding relationship between the absolute value of the real-time vector velocity and the limit value of the torque for the vehicle to stop the engine when going downhill, as shown in Table 8, it shows a partial example of the corresponding relationship between the absolute value of the real-time vector velocity for the vehicle to stop the engine when the vehicle is going downhill and the limit value of the torque for the vehicle to stop the engine according to the embodiment of the present invention.

**Table 7**

| | | | | |
|---|---|---|---|---|
| Absolute value of real-time vector velocity (km/h) | 0 | 3 | 5 | 10 |
| Limit value of torque (Nm) | 800 | 800 | 800 | 800 |

**Table 8**

| | | | | |
|---|---|---|---|---|
| Absolute value of real-time vector velocity (km/h) | 0 | 3 | 5 | 10 |
| Limit value of torque (Nm) | 700 | 700 | 700 | 700 |

It may be seen from the above technical solutions of the embodiments of the present invention that, according to the present invention, the execution information for controlling the start-stop of the engine is detected, and according to the ratio of the real-time vector velocity to time, the instantaneous acceleration is obtained, and the acceleration of the vehicle is calculated by the collected value of the acceleration sensor and the instantaneous acceleration. Then, the calculated acceleration is filtered, the value of the slope is obtained by converting with a conversion relationship between the filtered value of the acceleration and the slope, and then the start-stop of the engine is controlled according to the value of the slope and the value of the vehicle's torque requested by the driver. According to the technical solutions of the present invention, the influence of the instantaneous acceleration of real-time vector velocity is effectively reduced, and not only the value of the slope but also the value of the torque requested by the driver are taken into consideration in the conditions of start-stop of an engine on a ramp, therefore the fuel consumption is effectively reduced.

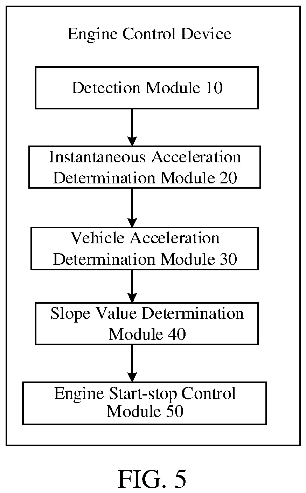

An embodiment of the present invention further provides an engine control device, as shown in FIG. 5, which is a schematic flow diagram of an engine control device according to the embodiment of the present invention, and the device includes:
a detection module 10, configured to detect execution information for controlling start-stop of an engine, wherein the execution information for controlling the start-stop of the engine at least includes a collected value of an acceleration sensor, a real-time vector velocity, and a value of torque requested by a driver;
an instantaneous acceleration determination module 20, configured to obtain an instantaneous acceleration according to a ratio of the real-time vector velocity to time;
a vehicle acceleration determination module 30, configured to calculate an acceleration of the vehicle according to the collected value of the acceleration sensor and the instantaneous acceleration;
a slope value determination module 40, configured to filter the acceleration to obtain a filtered value of the acceleration, and obtain a value of slope by converting with a conversion relationship between the filtered value of the acceleration and the slope; and
an engine start-stop control module 50, configured to control the start-stop of the engine according to the value of the slope and the value of the torque requested by the driver.

Correspondingly, the vehicle acceleration determination module 30 includes:
a vehicle acceleration detail module, configured to subtract the instantaneous acceleration from the collected value of the acceleration sensor to obtain the acceleration of the vehicle.

Correspondingly, the slope value determination module 40 includes:
an acquisition module, configured to acquire a filtering time parameter;
a maximum determination module, configured to determine a maximum value of the filtering time parameter according to the filtering time parameter;
a filtering selected value determination module, configured to take the maximum value of the filtering time parameter as a selected value for the filtering; and
a filtered acceleration module, configured to filter the acceleration according to the selected value for the filtering, to obtain a filtered value of the acceleration.

Correspondingly, before the slope value determination module 40, the device further includes:
a first judging module, configured to judge whether the absolute value of the real-time vector velocity is greater than 0.1 km/h;
wherein if the absolute value is not greater than 0.1 km/h, the value of the filtering time parameter ranges between 1s and 2s; and
if the absolute value is greater than 0.1 km/h, the value of the filtering time parameter is determined according to filtering influencing factors.

Correspondingly, the filtering influencing factors include velocity, braking force, steering force, lateral acceleration, velocity difference between front wheels and rear wheels, and running direction of the vehicle; and determining the value of the filtering time parameter according to the filtering influencing factors includes:
a second judging module, configured to judge whether the running direction in the filtering influencing factors is changed;
wherein if the running direction is changed, the value of the filtering time parameter ranges between 10s and 30s; and
if the running direction is not changed, the maximum value of the filtering time parameter is selected as the selected value for filtering of the acceleration according to the filtering time parameter corresponding to the filtering influencing factors.

Correspondingly, the engine start-stop control module 50 includes:
a third judging module, configured to judge whether the vehicle is in a state of going uphill;
wherein when the vehicle is in the state of going uphill, the engine is started if the value of the slope is greater than 8 degrees and the value of the torque requested by the driver is greater than a limit value of torque corresponding to the absolute value of the real-time vector velocity; and
the engine is stopped after a delay of 1s to 3s if the value of the slope is less than 3 degrees.

Correspondingly, the engine start-stop control module 50 is further configured to: when the vehicle is in the state of going downhill, starting the engine if the value of the slope is less than -10 degrees and the value of the torque requested by the driver is greater than the limit value of the torque corresponding to the absolute value of the real-time vector velocity; and
stopping the engine if the value of the slope is greater than -5 degrees or the value of the torque requested by the driver is less than the limit value of the torque corresponding to the absolute value of the real-time vector velocity.

With regard to the device in the embodiment described above, the specific way in which each module performs operation has been described in detail in the embodiment about the method, which will not be illustrated in detail here.

An embodiment of the present invention further provides an engine control system, which is configured to implement the engine start-stop control method described above.

An embodiment of the present invention further provides a vehicle, which includes the engine control system described above.

It is noted that the sequence of the embodiments described above of the present invention is only for description, and does not represent merits of the embodiments. Moreover, specific embodiments of this specification are described above. Other embodiments are within the scope of the appended claims. In some cases, the actions or steps recorded in the claims may be performed in a sequence different from that in the embodiments and still achieve the desired results. In addition, the processes depicted in the drawings do not necessarily require the specific sequence or continuous sequence shown to achieve the desired results. In some embodiments, multitasking and parallel processing are also possible or may be advantageous.

The description above is only a specific implementation of the present application, but the scope of protection of the present application is not limited thereto. Anyone skilled in the art can easily conceive variations or substitutions within the technical scope disclosed in the present application, which should be covered by the scope of protection of the present application. Therefore, the scope of protection of the present application should be based on the scope of protection of the claims.

## Claims

1. An engine control method, **characterized by** comprising:
S201, detecting execution information for controlling start-stop of an engine, wherein the execution information for controlling the start-stop of the engine at least comprises a collected value of an acceleration sensor, a real-time vector velocity, and a value of torque requested by a driver;
S202, obtaining an instantaneous acceleration according to a ratio of the real-time vector velocity to time;
S203, calculating an acceleration of a vehicle along a traveling direction of the vehicle according to the collected value of the acceleration sensor and the instantaneous acceleration;
S204, filtering the acceleration along the traveling direction of the vehicle to obtain a filtered value of the acceleration and obtaining a value of a slope by converting with a conversion relationship between the filtered value of the acceleration along the traveling direction of the vehicle and the slope; and
S205, controlling the start-stop of the engine according to the value of the slope and the value of the torque requested by the driver;
wherein filtering the acceleration along the traveling direction of the vehicle to obtain the filtered value of the acceleration comprises:
S401, acquiring a filtering time parameter;
S402, determining a maximum value of the filtering time parameter according to the filtering time parameter;
S403, taking the maximum value of the filtering time parameter as a selected value for the filtering; and
S404, filtering the acceleration according to the selected value for the filtering, to obtain the filtered value of the acceleration.

2. The engine control method according to claim 1, wherein calculating the acceleration of the vehicle according to the collected value of the acceleration sensor and the instantaneous acceleration comprises:
subtracting the instantaneous acceleration from the collected value of the acceleration sensor to obtain the acceleration of the vehicle.

3. The engine control method according to claim 1, wherein prior to filtering the acceleration to obtain the filtered value of the acceleration, the method further comprises:
judging whether an absolute value of the real-time vector velocity is greater than 0.1km/h;
wherein if the absolute value of the real-time vector velocity is not greater than 0.1km/h, the value of the filtering time parameter ranges between 1s and 2s;
if the absolute value of the real-time vector velocity is greater than 0.1km/h, the value of the filtering time parameter is determined according to filtering influencing factors.

4. The engine control method according to claim 3, wherein the filtering influencing factors comprise velocity, braking force, steering force, lateral acceleration, vehicle difference between front wheels and rear wheels, and running direction of the vehicle;
determining the value of the filtering time parameter according to the filtering influencing factors comprises:
judging whether the running direction in the filtering influencing factors is changed;
wherein if the running direction in the filtering influencing factors is changed, the value of the filtering time parameter ranges between 10s and 30s; and
if the running direction in the filtering influencing factors is not changed, the maximum value of the filtering time parameter is selected as the selected value for the filtering of the acceleration according to the filtering time parameter corresponding to the filtering influencing factors.

5. The engine control method according to claim 1, wherein controlling the start-stop of the engine according to the value of the slope and the value of the torque requested by the driver comprises:
judging whether the vehicle is in a state of going uphill;
wherein when the vehicle is in the state of going uphill, the engine is started if the value of the slope is greater than 8 degrees and the value of the torque requested by the driver is greater than a limit value of torque corresponding to an absolute value of the real-time vector velocity; and
the engine is stopped after a delay of 1s to 3s if the value of the slope is less than 3 degrees.

6. The engine control method according to claim 5, further comprising:
when the vehicle is in a state of going downhill, starting the engine if the value of the slope is less than -10 degrees and the value of the torque requested by the driver is greater than the limit value of the torque corresponding to the absolute value of the real-time vector velocity; and
stopping the engine if the value of the slope is greater than -5 degrees or the value of the torque requested by the driver is less than the limit value of the torque corresponding to the absolute value of the real-time vector velocity.

7. An engine control device, **characterized by** comprising:
a detection module (10), configured to detect execution information for controlling start-stop of an engine, wherein the execution information for controlling the start-stop of the engine at least comprises a collected value of an acceleration sensor, a real-time vector velocity, and a value of torque requested by a driver;
an instantaneous acceleration determination module (20), configured to obtain an instantaneous acceleration according to a ratio of the real-time vector velocity to time;
a vehicle acceleration determination module (30), configured to calculate an acceleration of a vehicle along a traveling direction of the vehicle according to the collected value of the acceleration sensor and the instantaneous acceleration;
a slope value determination module (40), configured to filter the acceleration along the traveling direction of the vehicle to obtain a filtered value of the acceleration and obtain a value of slope by converting with a conversion relationship between the filtered value of the acceleration along the traveling direction of the vehicle and the slope; wherein filtering the acceleration along the traveling direction of the vehicle to obtain the filtered value of the acceleration comprises: acquiring a filtering time parameter; determining a maximum value of the filtering time parameter according to the filtering time parameter; taking the maximum value of the filtering time parameter as a selected value for the filtering; and filtering the acceleration according to the selected value for the filtering, to obtain the filtered value of the acceleration; and
an engine start-stop control module (50), configured to control the start-stop of the engine according to the value of the slope and the value of the torque requested by the driver.

8. A vehicle, comprising the engine control device according to claim 7.

## Patentansprüche

1. Motorsteuerungsverfahren, **dadurch gekennzeichnet, dass** es Folgendes umfasst:
S201,Erkennen von Durchführungsinformationen zur Start-Stopp-Steuerung eines Motors, wobei die Durchführungsinformationen zur Start-Stopp-Steuerung des Motors mindestens einen erhobenen Wert eines Beschleunigungssensors, eine Echtzeit-Vektorgeschwindigkeit und einen von einem Fahrer geforderten Drehmomentwert umfassen;
S202, Erhalten einer Momentanbeschleunigung nach einem Echtzeit-Vektorgeschwindigkeit-Zeit-Verhältnis;
S203, Berechnen einer Beschleunigung eines Fahrzeugs entlang einer Verfahrrichtung des Fahrzeugs nach dem erhobenen Wert des Geschwindigkeitssensors und der Momentanbeschleunigung;
S204, Filtern der Beschleunigung entlang der Verfahrrichtung des Fahrzeugs, um einen gefilterten Wert der Beschleunigung zu erhalten, und Erhalten eines Werts eines Gefälles durch Umrechnen mit einer Umrechnungsbeziehung zwischen dem gefilterten Wert der Beschleunigung entlang der Verfahrrichtung des Fahrzeugs und dem Gefälle; und
S205,Start-Stopp-Steuern des Motors nach dem Wert des Gefälles und dem Wert des vom Fahrer geforderten Drehmoments;
wobei das Filtern der Beschleunigung entlang der Verfahrrichtung des Fahrzeugs, um den gefilterten Wert der Beschleunigung zu erhalten, Folgendes umfasst:
S401,Erfassen eines Filterungszeitparameters;
S402, Ermitteln eines Höchstwerts des Filterungszeitparameters nach dem Filterungszeitparameter;
S403, Heranziehen des Höchstwerts des Filterungszeitparameters als einen ausgewählten Wert für das Filtern; und
S404,Filtern der Beschleunigung nach dem ausgewählten Wert zum Filtern, um den gefilterten Beschleunigungswert zu erhalten.

2. Motorsteuerungsverfahren nach Anspruch 1, wobei das Berechnen der Beschleunigung des Fahrzeugs nach dem erhobenen Wert des Beschleunigungssensors und der Momentanbeschleunigung Folgendes umfasst:
Subtrahieren der Momentanbeschleunigung vom erhobenen Wert des Beschleunigungssensors, um die Beschleunigung des Fahrzeugs zu erhalten.

3. Motorsteuerungsverfahren nach Anspruch 1, wobei das Verfahren vor dem Filtern der Beschleunigung, um den gefilterten Beschleunigungswert zu erhalten, zudem Folgendes umfasst:
Beurteilen, ob ein absoluter Wert der Echtzeit-Vektorgeschwindigkeit größer ist als 0,1 km/h;
wobei der Wert des Filterungszeitparameters zwischen 1 s und 2 s beträgt, wenn der absolute Wert der Echtzeit-Vektorgeschwindigkeit nicht größer als 0,1 km/h ist;
wobei der Wert des Filterungszeitparameters nach den Filterungsbeeinflussungsfaktoren ermittelt wird, wenn der absolute Wert der Echtzeit-Vektorgeschwindigkeit größer ist als 0,1 km/h.

4. Motorsteuerungsverfahren nach Anspruch 3, wobei die Filterungsbeeinflussungsfaktoren Geschwindigkeit, Bremskraft, Lenkkraft, Querbeschleunigung, Fahrzeugdifferenz zwischen Vorder- und Hinterrädern und Fahrtrichtung des Fahrzeugs umfassen;
wobei das Ermitteln des Werts des Filterungszeitparameters nach den Filterungsbeeinflussungsfaktoren Folgendes umfasst:
Beurteilen, ob die Fahrtrichtung in den Filterungsbeeinflussungsfaktoren geändert ist;
wobei der Wert des Filterungszeitparameters zwischen 10 s und 30 s beträgt, wenn die Fahrtrichtung in den Filterungsbeeinflussungsfaktoren geändert ist; und
wenn die Fahrtrichtung in den Filterungsbeeinflussungsfaktoren nicht geändert ist,
wird der Höchstwert des Filterungszeitparameters als der ausgewählte Wert für das Filtern der Beschleunigung gemäß dem Filterungszeitparameter entsprechend den Filterungsbeeinflussungsfaktoren ausgewählt.

5. Motorsteuerungsverfahren nach Anspruch 1, wobei das Start-Stopp-Steuern des Motors nach dem Wert des Gefälles und dem vom Fahrer geforderten Drehmomentwert Folgendes umfasst:
Beurteilen, ob sich das Fahrzeug in einem Bergauffahrt-Zustand befindet;
wobei der Motor, wenn sich das Fahrzeug im Bergauffahrt-Zustand befindet, gestartet wird, wenn der Wert des Gefälles größer ist als 8 Grad und der vom Fahrer geforderte Drehmomentwert größer ist als ein Drehmomentgrenzwert entsprechend einem absoluten Wert der Echtzeit-Vektorgeschwindigkeit, und
der Motor nach einer Verzögerung von 1 s bis 3 s gestoppt wird, wenn der Wert des Gefälles weniger als 3 Grad beträgt.

6. Motorsteuerungsverfahren nach Anspruch 5, zudem umfassend:
Starten des Motors, wenn der Wert des Gefälles weniger als -10 Grad beträgt und der vom Fahrer geforderte Drehmomentwert größer ist als der Drehmomentgrenzwert entsprechend dem absoluten Wert der Echtzeit-Vektorgeschwindigkeit, wenn sich das Fahrzeug in einem Bergabfahrt-Zustand befindet, und
Stoppen des Motors, wenn der Wert des Gefälles größer als -5 Grad ist oder der vom Fahrer geforderte Drehmomentwert kleiner ist als der Drehmomentgrenzwert,
der dem absoluten Wert der Echtzeit-Vektorgeschwindigkeit entspricht.

7. Motorsteuerungsvorrichtung, **dadurch gekennzeichnet, dass** sie Folgendes umfasst:
ein Erkennungsmodul (10), das ausgelegt ist, um Durchführungsinformationen zur Start-Stopp-Steuerung eines Motors zu erkennen, wobei die Durchführungsinformationen zur Start-Stopp-Steuerung des Motors mindestens einen erhobenen Wert eines Beschleunigungssensors, eine Echtzeit-Vektorgeschwindigkeit und einen von einem Fahrer geforderten Drehmomentwert umfassen;
ein Momentanbeschleunigungsbestimmungsmodul (20), das ausgelegt ist, um eine Momentanbeschleunigung nach einem Echtzeit-Vektorgeschwindigkeits-Zeit-Verhältnis zu erhalten;
ein Fahrzeugbeschleunigungsbestimmungsmodul (30), das ausgelegt ist, um eine Beschleunigung eines Fahrzeugs entlang einer Verfahrrichtung des Fahrzeugs nach dem erhobenen Wert des Beschleunigungssensors und der Momentangeschwindigkeit zu berechnen;
ein Gefällewertbestimmungsmodul (40), das ausgelegt ist, um die Beschleunigung entlang der Verfahrrichtung des Fahrzeugs zu filtern, um einen gefilterten Wert der Beschleunigung zu erhalten und einen Gefällewert durch die Umrechnung mit einer Umrechnungsbeziehung zwischen dem gefilterten Wert der Beschleunigung entlang der Verfahrrichtung des Fahrzeugs und des Gefälles zu erhalten, wobei das Filtern der Beschleunigung entlang der Verfahrrichtung des Fahrzeugs, um den gefilterten Wert der Beschleunigung zu erhalten, Folgendes umfasst:
Erfassen eines Filterungszeitparameters; Ermitteln eines Höchstwerts des Filterungszeitparameters nach dem Filterungszeitparameter; Heranziehen des Höchstwerts des Filterungszeitparameters als einen ausgewählten Wert für das Filtern; und Filtern der Beschleunigung nach dem ausgewählten Wert zum Filtern, um den gefilterten Beschleunigungswert zu erhalten; und
ein Motor-Start-Stopp-Steuerungsmodul (50), das ausgelegt ist, um das Starten/Stoppen des Motors nach dem Wert des Gefälles und dem vom Fahrer geforderten Drehmomentwert zu steuern.

8. Fahrzeug, umfassend die Motorsteuerungsvorrichtung nach Anspruch 7.

## Revendications

1. Procédé de commande de moteur, **caractérisé en ce qu'**il comprend :
S201, détecter des informations d'exécution pour commander le démarrage-l'arrêt d'un moteur, dans lequel les informations d'exécution pour commander le démarrage-l'arrêt du moteur comprennent au moins une valeur recueillie d'un capteur d'accélération, une vitesse vectorielle en temps réel, et une valeur de couple demandée par un conducteur ;
S202, obtenir une accélération instantanée selon un rapport entre la vitesse vectorielle en temps réel et le temps ;
S203, calculer une accélération d'un véhicule le long d'une direction de déplacement du véhicule selon la valeur recueillie du capteur d'accélération et l'accélération instantanée ;
S204,filtrer l'accélération le long de la direction de déplacement du véhicule pour obtenir une valeur filtrée de l'accélération et obtenir une valeur d'une pente en convertissant avec une relation de conversion entre la valeur filtrée de l'accélération le long de la direction de déplacement du véhicule et la pente ; et
S205,commander le démarrage-l'arrêt du moteur selon la valeur de la pente et la valeur de couple demandée par le conducteur ;
dans lequel le filtrage de l'accélération le long de la direction de déplacement du véhicule pour obtenir la valeur filtrée de l'accélération comprend :
5401,acquérir un paramètre de temps de filtrage ;
S402, déterminer une valeur maximale du paramètre de temps de filtrage selon le paramètre de temps de filtrage ;
5403,prendre la valeur maximale du paramètre de temps de filtrage comme une valeur sélectionnée pour le filtrage ; et
S404, filtrer l'accélération selon la valeur sélectionnée pour le filtrage, pour obtenir la valeur filtrée de l'accélération.

2. Procédé de commande de moteur selon la revendication 1, dans lequel le calcul de l'accélération du véhicule selon la valeur recueillie du capteur d'accélération et l'accélération instantanée comprend :
soustraire l'accélération instantanée de la valeur recueillie du capteur d'accélération pour obtenir l'accélération du véhicule.

3. Procédé de commande de moteur selon la revendication 1, dans lequel avant de filtrer l'accélération pour obtenir la valeur filtrée de l'accélération, le procédé comprend de plus :
juger si une valeur absolue de la vitesse vectorielle en temps réel est supérieure à 0,1 km/h ;
dans lequel, si la valeur absolue de la vitesse vectorielle en temps réel n'est pas supérieure à 0,1 km/h, la valeur du paramètre de temps de filtrage est comprise entre 1 et 2 s ;
si la valeur absolue de la vitesse vectorielle en temps réel est supérieure à 0,1 km/h, la valeur du paramètre de temps de filtrage est déterminée selon des facteurs d'influence du filtrage.

4. Procédé de commande de moteur selon la revendication 3, dans lequel les facteurs d'influence du filtrage comprennent la vitesse, la force de freinage, la force de direction, l'accélération latérale, la différence de véhicule entre les roues avant et les roues arrière et la direction de marche du véhicule ;
la détermination de la valeur du paramètre du temps de filtrage selon les facteurs d'influence du filtrage comprend :
juger si la direction de marche dans les facteurs d'influence du filtrage est modifiée ;
dans lequel si la direction de marche dans les facteurs d'influence du filtrage est modifiée, la valeur du paramètre de temps de filtrage est comprise entre 10 et 30 s ; et
si la direction de marche dans les facteurs d'influence de filtrage n'est pas modifiée, la valeur maximale du paramètre de temps de filtrage est sélectionnée comme la valeur sélectionnée pour le filtrage de l'accélération selon le paramètre de temps de filtrage correspondant aux facteurs d'influence du filtrage.

5. Procédé de commande de moteur selon la revendication 1, dans lequel la commande de démarrage-d'arrêt du moteur selon la valeur de la pente et la valeur de couple demandée par le conducteur comprend :
juger si le véhicule est en phase de montée ;
dans lequel lorsque le véhicule est en phase de montée, le moteur est démarré si la valeur de la pente est supérieure à 8 degrés et la valeur de couple demandée par le conducteur est supérieure à une valeur limite de couple correspondant à une valeur absolue de la vitesse vectorielle en temps réel ; et
le moteur est arrêté après un délai de 1 à 3 secondes si la valeur de la pente est inférieure à 3 degrés.

6. Procédé de commande de moteur selon la revendication 5, comprenant de plus :
lorsque le véhicule est en phase de descente, démarrer le moteur si la valeur de la pente est inférieure à - 10 degrés et si la valeur de couple demandée par le conducteur est supérieure à la valeur limite du couple correspondant à la valeur absolue de la vitesse vectorielle en temps réel ; et
arrêter le moteur si la valeur de la pente est supérieure à - 5 degrés ou si la valeur de couple demandée par le conducteur est inférieure à la valeur limite du couple correspondant à la valeur absolue de la vitesse vectorielle en temps réel.

7. Dispositif de commande de moteur, **caractérisé en ce qu'**il comprend :
un module de détection (10), configuré pour détecter des informations d'exécution pour commander le démarrage-l'arrêt d'un moteur, dans lequel les informations d'exécution pour commander le démarragel'arrêt du moteur comprennent au moins une valeur recueillie d'un capteur d'accélération, une vitesse vectorielle en temps réel, et une valeur de couple demandée par un conducteur ;
un module de détermination d'accélération instantanée (20), configuré pour obtenir une accélération instantanée selon un rapport entre la vitesse vectorielle en temps réel et le temps ;
un module de détermination d'accélération du véhicule (30), configuré pour calculer une accélération d'un véhicule le long d'une direction de déplacement du véhicule selon la valeur recueillie du capteur d'accélération et l'accélération instantanée ;
un module de détermination de la valeur de la pente (40), configuré pour filtrer l'accélération le long de la direction de déplacement du véhicule pour obtenir une valeur filtrée de l'accélération et obtenir une valeur de la pente en convertissant avec une relation de conversion entre la valeur filtrée de l'accélération le long de la direction de déplacement du véhicule et la pente ; dans lequel le filtrage de l'accélération le long de la direction de déplacement du véhicule pour obtenir la valeur filtrée de l'accélération comprend :
acquérir un paramètre de temps de filtrage ; déterminer une valeur maximale du paramètre de temps de filtrage selon le paramètre de temps de filtrage ; prendre la valeur maximale du paramètre de temps de filtrage comme une valeur sélectionnée pour le filtrage ; et filtrer l'accélération selon la valeur sélectionnée pour le filtrage, pour obtenir la valeur filtrée de l'accélération ; et
un module de commande de démarrage-d'arrêt du moteur (50), configuré pour commander le démarrage-l'arrêt du moteur selon la valeur de la pente et la valeur de couple demandée par le conducteur.

8. Véhicule, comprenant le dispositif de commande de moteur selon la revendication 7.
